# EUROPEAN PATENT APPLICATION

(11) **EP 1 743 840 A1**
(43) Date of publication of application: **17.01.2007**
(21) Application number: 05106292.5
(22) Date of filing: 11.07.2005
(51) Int. Cl.: B65B 59/00, B65B 43/52, B65G 17/26

(54) **Conveyor for adjusting to different sized containers**

(71) Applicant: ASEPTIS, S.L., 08210 Barberà del Valles (ES)
(72) Inventor: Quetin, Arnaud, 08037 Barcelona (ES)
(74) Representative: Barlocci, Anna

(57) **Abstract**

It comprises a first and second conveyor units (4, 5) having first and second sets of arms (6, 7) including means for holding packages (2). The conveyor units (4, 5) respectively comprises first and second twin conveying members (14a, 14b, 15a, 15b) spaced apart from each other and synchronously driven in a common advance direction. The arms (6, 7) are engaged at different points thereof to said first and second twin conveying members (14a, 14b, 15a, 15b) whereby they are driven along the packaging machine while being supported at said different points. A greater amount of packages 2 may be carried by the carousel (1).

## Description

The present invention relates to a carousel for carrying packages in a packaging machine.

### BACKGROUND OF THE INVENTION

Devices for carrying packages through stations in a packaging machine are known in the art such as the one disclosed in ES2098169, which comprises two conveying units with respective single conveying members, such as belts, arranged in parallel and each driven by a pair of pulleys. The pulleys in different conveying units are rotated in the reverse direction to each other so that the respective belts run in the same direction. Each conveying member has gripping means such that packages are held between the gripping means of one conveying member and the gripping means of the other conveying member.

Other known devices used for carrying packages through stations in a packaging machine comprises a conveyor unit provided with arms having gripping means for holding packages arranged therebetween. The conveyor unit further includes a single conveying member driven by two opposed horizontal pulleys. The belt is provided with pairs of substantially parallel arms extending outward the belt. A series of packages may be held between said parallel arms so that rotation of the pulleys results in advancement of the arms carrying the corresponding packages through the different stations in the machine.

In this respect, there are two ways of arranging the series of packages between the arms. One of such ways is arranging the packages between the arms substantially aligned to each other, that is, lying in a substantially common plane. Other way of arranging the series of packages between the arms is arranging them in substantially parallel planes.

Both ways of arranging the series of packages between the arms in known devices suffer from a limited number of packages which can be treated in each station of the packaging machine. This limitation is due to the fact that the arms carrying the packages are in an overhanging arrangement projecting from the conveying member, that is, they are cantilevered.

A further disadvantage of the known devices for carrying packages through stations in a packaging machine is that changing the package format is not possible or at best it is very difficult to perform.

### DESCRIPTION OF THE INVENTION

The invention provides a carousel for carrying packages in a packaging machine comprising a first conveyor unit with a first set of arms having means for holding packages and first twin conveying members which are spaced apart from each other and synchronously driven in a common advance direction. The arms of said first set of arms are engaged at different points thereof to said first twin conveying members whereby they are driven along the packaging machine while being supported at said different points.

In some embodiments of the carousel, it further comprises at least a second conveyor unit provided with a second set of arms having means for holding packages and second twin conveying members which are spaced apart from each other and synchronously driven in said common advance direction. The arms of said second set of arms are engaged at different points thereof to said second twin conveying members whereby they are driven along the packaging machine while being supported at said different points.

In both the above embodiments of the invention a higher amount of packages may be carried by the transfer device since each pair of arms may withstand a greater quantity of packages held therebetween as the arms in the conveyor units are held by their opposite ends, not being cantilevered as in prior art machines.

In other embodiments, each package is held between one first arm of said first conveyor unit and one second arm of said second conveyor unit. In this case, the first twin conveying members may be moved relative to said second twin conveying members for adapting the distance between the first arms of said first conveyor unit and the second arms of said second conveyor unit to different package sizes.

Each first and second conveyor units is provided with two spaced apart pairs of rotating wheels which are rotated in operation in the same direction by being linked through respective transverse common shafts. Said pairs of wheels are driven through said corresponding twin conveying members.

Preferably, the transverse common shafts linking the opposed pairs of rotating wheels are horizontal and said conveying members are chains. In other embodiments, conveying members may comprise belts driven by pulleys.

According to another feature of the invention, the distance between the opposed conveyor units may be varied for accommodating more or less packages arranged between the horizontal arms. This means that the conveyor units may be axially moved to the respective shaft when not in use for this adjustment operation.

The first arms of the first conveyor unit may be similar or different in length with respect to the second arms of the second conveyor unit.

The packages are preferably disposed transversely to the arms. Rotation of the carousel is carried out by driving means which cause the carousel to be rotated intermittently, stopping for a period of time on each station in the machine for handling or filling the package. Alternatively, the carousel could be rotated continuously.

Consecutive arms in different conveyor units and carrying different series of packages may be substantially adjacent to each other. This arrangement is used for a maximum size package format. For smaller packages, consecutive arms in different conveyor units and carrying different series of packages will be substantially distant from each other.

The invention allows productive yield to be highly increased over prior art machines. From a typical production rate of 200-240 packages per minute (50/60 cycles, 4 packages), a packaging machine provided with the carousel of the invention allows a production rate of 400-600 packages per minute by disposing series of 8 packages between each pair of arms in the carousel. It is apparent that even more or less than 8 packages may be provided between each pair of arms since the arms are not cantilevered as in prior art machines, as stated above, and therefore more weight can be withstood thereby achieving a still higher productive yield.

### BRIEF DESCRIPTION OF THE DRAWINGS

A particular embodiment of a carousel for carrying packages in a packaging machine of the present invention will be described in the following, only by way of non-limiting example, with reference to the appended drawings, in which:
Fig. 1 is a general perspective view of one embodiment of a carousel for carrying packages in a packaging machine according to the present invention;
Figs. 2-4 are front elevational, side elevational and top plan operative views of the carousel shown in Fig. 1, respectively; and
Fig. 5 diagrammatically shows the arrangement of the conveyor units in the carousel.

### DESCRIPTION OF EMBODIMENTS

A carousel 1 according to the invention is shown in the figures which is intended for carrying packages 2 through stations 3 in a packaging machine.

One of said stations 3 may be a package filling station in which the packages 2 are filled with a product, for example as disclosed in ES2161111. When packages 2 reach this station 3 by being driven by the carousel 1, they are opened by their upper edge and its lower portion is unfolded. Movable injectors are then inserted into said opened upper edge of the package 2 and it is filled by filling stations.

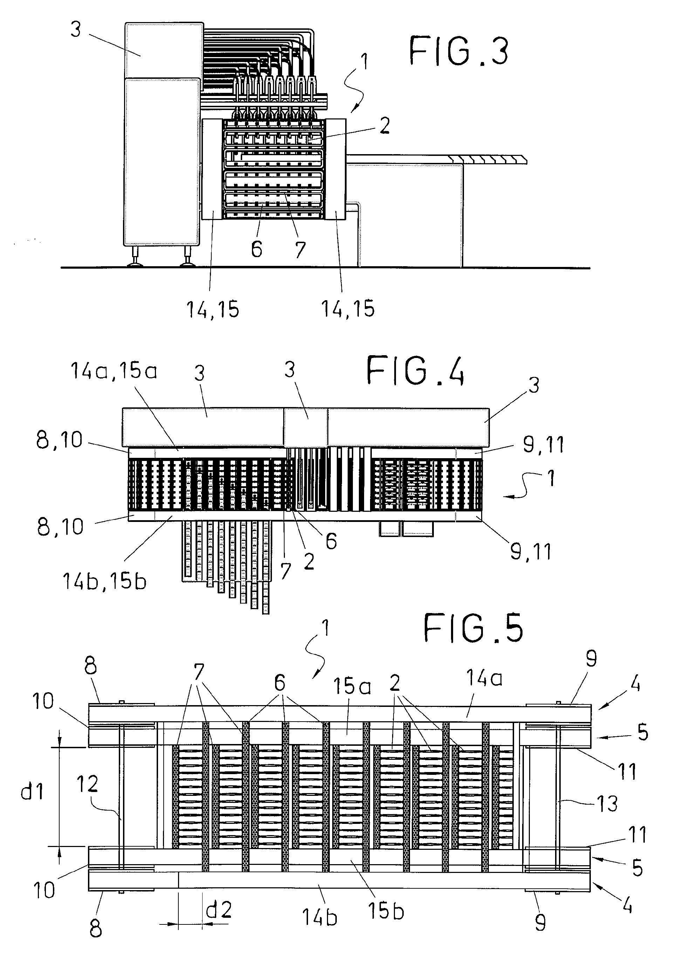

Referring particularly to Fig. 5, the carousel 1 corresponding to one embodiment of the invention causes the packages 2 to be advanced through the stations 3 in the machine.

The carousel 1 comprises a first conveyor unit 4 with a first set of arms 6 having means for holding packages 2. The first conveyor unit 4 also has first twin conveying members 14a, 14b which are spaced apart from each other.

Conveying members 14a, 14b are synchronously driven in a common advance direction. The arms of said first set of arms 6 are engaged at different points thereof (for example, art their respective opposite ends) to the first twin conveying members 14a, 14b whereby they are driven along the packaging machine while being supported at said different points.

The carousel 1 further comprises a second conveyor unit 5 provided with a second set of arms 7 having means for holding packages 2 and second twin conveying members 15a, 15b which are spaced apart from each other and synchronously driven in said common advance direction. The arms 7 of said second set of arms are engaged at different points thereof (for example, art their respective opposite ends) to said second twin conveying members 15a, 15b whereby they are driven along the packaging machine while being supported at said different points.

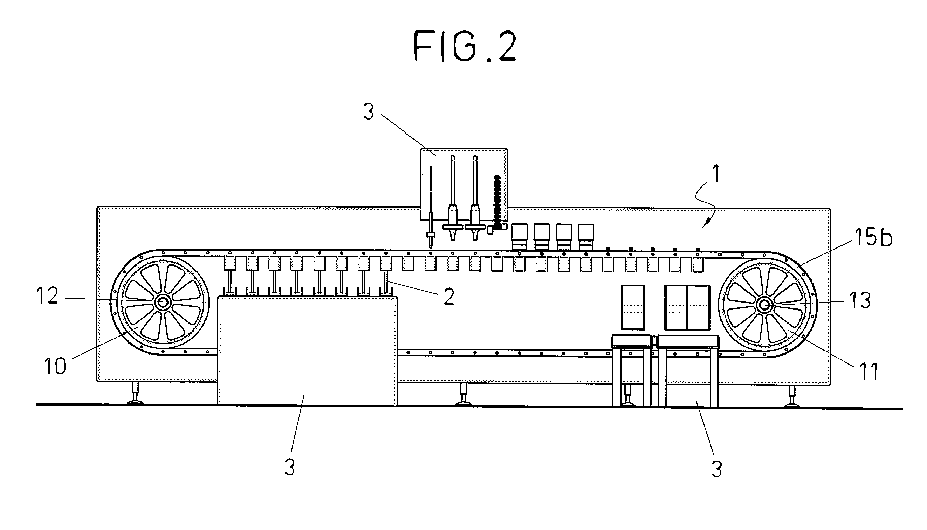

The respective arms 6, 7 of said conveyor units 4, 5 are provided with gripping means (not shown) such as for example the grippers shown in ES2161111. The gripping means hold the packages 2, as shown in Fig. 2, which are hanging down on the respective arms 6, 7.

The packages 2 are preferably disposed transversely to the arms 6, 7, so that the packages 2 are conveyed lengthways relative to rotation of the carousel 1. Rotation of the carousel 1 is carried out by driving means (not shown) which cause the carousel 1 to be rotated intermittently, stopping for a period of time on each station in the machine for handling or filling the package 2. Alternatively, the carousel 1 could be rotated continuously.

In operation, conveying members 14a, 14b, 15a, 15b in the respective conveyor units 4, 5 are driven in the same direction.

By holding the arms 6, 7 to the respective conveying members 14a, 14b and 15a, 15b, a higher load may be carried by the carousel 1 and therefore a greater amount of packages 2 may be therefore advanced.

In the embodiment shown, each package 2 is held between one first arm 6 of said first conveyor unit 14a, 14b and one second arm 7 of said second conveyor unit 15a, 15b.

In this respect, the first twin conveying members 14a, 14b may be moved (when not in operation) relative to said second twin conveying members 15a, 15b or vice versa for adapting the distance d2 between the first arms 6 of said first conveyor unit 4 and the second arms 7 of said second conveyor unit 7 to different package sizes.

As shown in the figures, each first and second conveyor units 4, 5 is provided with two spaced apart pairs of rotating wheels 8, 9, 10, 11 which are rotated in operation in the same direction by being linked through respective transverse common horizontal shafts 12, 13. Said pairs of wheels 8, 9, 10, 11 drive said corresponding twin conveying members 14a, 14b, 15a, 15b. In this embodiment, the twin conveying members 14a, 14b, 15a, 15b are belts but they could be chains driven by pulleys.

The first arms 6 of the first conveyor unit 4 may be similar or different in length with respect to the second arms 7 of the second conveyor unit 5.

The distance d1 between the conveyor units 4, 5 (see in Fig. 5) may be varied for accommodating more or less packages 2 arranged between the respective arms 6, 7. This means that the conveyor units 4, 5 may be axially moved to the respective shaft 12, 13 when not in use for this adjustment operation. The longer the distance d1, the higher amount of packages 2 would be arranged between the horizontal arms 6, 7. As stated above, as the arms 6, 7, are held by their opposite ends, a high amount of packages 2 may be carried by them.

In operation, and according to the particular embodiment shown in the figures, the pairs of rotating wheels 8, 9 and 10, 11 of the conveyor units 4, 5 are simultaneously rotated in the same direction. The pairs of wheels 8, 9 and 10, 11 each drive two corresponding pairs of conveying members 14a, 14b and 15a, 15b. Conveying members 14a, 14b, 15a, 15b may be, for example, belts running around the wheels 8, 9, 10, 11.

In said particular embodiment, in which wheels 8, 9, 10, 11 and belts 14, 15 are provided, the first and second set of arms 6, 7 of the respective conveyor units 4, 5 are attached by their opposed ends to the corresponding belts 14, 15 and, as explained above, each package 2 is held by its respective longitudinal ends between a first arm 6 of the first conveyor unit 4 and a second arm 7 of the second conveyor unit 5, as it may be seen from Fig. 5.

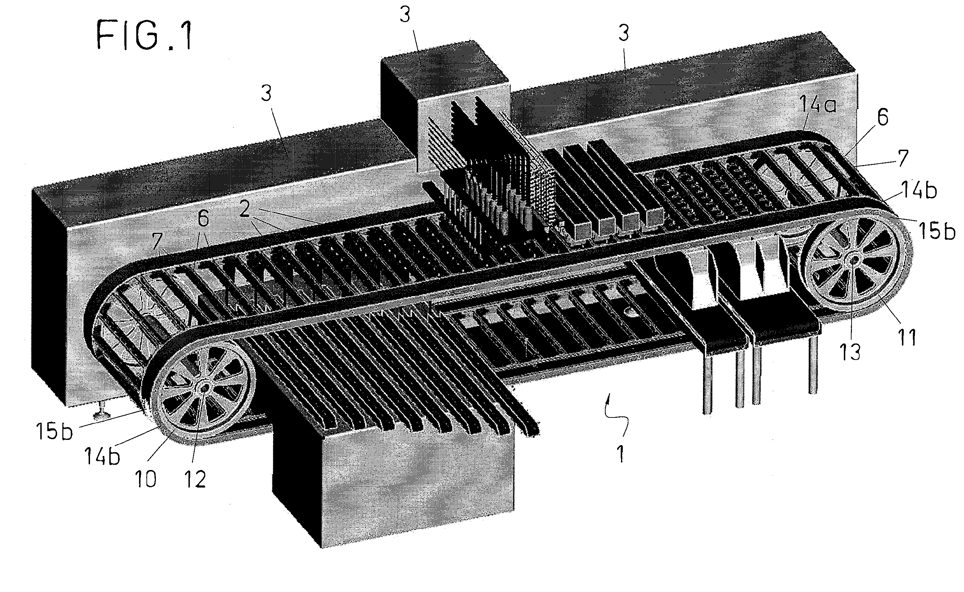

As shown in Fig. 1, the packages 2 are disposed transversely to arms 6, 7 in the conveyor units 4, 5 so that they are conveyed lengthways relative to rotation of the carousel 1 through the stations 3. Driving means (not shown) cause the carousel 1 to be rotated intermittently, stopping for a period of time on each station 3 in the machine for handling or filling the packages 2.

For easily and rapidly changing the package format, that is, for disposing packages 2 of a different size in the carousel 1, the wheels 8, 9 of the first conveyor unit 4 may be adjustably rotated with regard to the wheels 10, 11 of the second conveyor unit 5 causing the first twin conveying members 14a, 14b to be displaced relative to the second twin conveying members 15a, 15b or vice versa. Due to the fact that the opposed longitudinal ends of each package 2 are linked to arms of different conveyor units, the spacing d2 between arms 6, 7 may be adjusted through this relative rotation of the wheels and therefore different formats according to package size may be thus accommodated.

Arms 6, 7 in different conveyor units 4, 5 may be similar or different in length with respect to each other as required. On the other hand, consecutive arms 6, 7 in different conveyor units 4, 5 and carrying different series of packages 2 may be substantially adjacent to each other or they may be spaced apart by a distance according to production requirements.

Modifications considered as convenient may be introduced in the carousel for carrying packages described herein provided that the essence of the invention that is summarized in the following claims is not altered.

## Claims

1. A carousel for carrying packages in a packaging machine comprising a first conveyor unit (4) provided with a first set of arms (6) having means for holding packages (2), **characterized in that** said first conveyor unit (4) comprises first twin conveying members (14a, 14b) which are spaced apart from each other and synchronously driven in a common advance direction, the arms (6) of said first set of arms (6) being engaged at different points thereof to said first twin conveying members (14a, 14b) whereby they are driven along the packaging machine while being supported at said different points.

2. A carousel as claimed in claim 1, **characterized in that** it further comprises at least a second conveyor unit (5) provided with a second set of arms (7) having means for holding packages (2), and second twin conveying members (15a, 15b) which are spaced apart from each other and synchronously driven in said common advance direction, the arms (7) of said second set of arms (7) being engaged at different points thereof to said second twin conveying members (15a, 15b) whereby they are driven along the packaging machine while being supported at said different points.

3. A carousel as claimed in claim 2, **characterized in that** each package (2) is held between one first arm (6) of said first conveyor unit (4) and one second arm (7) of said second conveyor unit (5).

4. A carousel as claimed in claim 1 or claim 2, **characterized in that** said first twin conveying members (14a, 14b) and said second twin conveying members (15a, 15b) may be moved relative to each other for adapting the distance (d2) between the first arms (6) of said first conveyor unit (4) and the second arms (7) of said second conveyor unit (5) to different package sizes.

5. A carousel as claimed in any of the preceding claims, **characterized in that** each first and second conveyor units (4, 5) is provided with two spaced apart pairs of rotating wheels (8, 9) and (10, 11) which are rotated in operation in the same direction by being linked through respective transverse common shafts (12, 13), said pairs of wheels (8, 9) and (10, 11) driving the corresponding twin conveying members (14a, 14b) and (15a, 15b).

6. A carousel as claimed in claim 5, **characterized in that** said transverse common shafts (12, 13) linking the opposed pairs of rotating wheels (8, 9) and (10, 11) are horizontal.

7. A carousel as claimed in any of the preceding claims, **characterized in that** said conveyor units (4, 5) are separated at a distance (d1) which may be varied for accommodating more or less packages (2) arranged between the said first and second arms (6, 7).

8. A carousel as claimed in claim 2, **characterized in that** the first arms (6) of said first conveyor unit (4) are similar in length with respect to the second arms (7) of the second conveyor unit (5).

9. A carousel as claimed in claim 2, **characterized in that** the first arms (6) of one first conveyor unit (4) are different in length with respect to the second arms (7) of the second conveyor unit (5).
